# EUROPÄISCHE PATENTSCHRIFT

(11) **EP 3 164 618 B1**
(45) Veröffentlichungstag und Bekanntmachung des Hinweises auf die Patenterteilung: **17.07.2019**
(21) Anmeldenummer: 15732664.6
(22) Anmeldetag: 29.06.2015
(51) Int. Cl.: F16D 51/12, F16D 51/22, F16D 65/22

(54) **BREMSSYSTEM**
BRAKE SYSTEM
SYSTÈME DE FREINAGE

(30) Priorität: 03.07.2014 DE 102014212897
(43) Veröffentlichungstag der Anmeldung: 10.05.2017
(73) Patentinhaber: SAF-HOLLAND GmbH, 63856 Bessenbach-Keilberg (DE)
(72) Erfinder: DREWES, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2015/064649
(87) Internationale Veröffentlichungsnummer: WO 2016/001114

(56) Entgegenhaltungen:
- FR-A- 973 248
- FR-A- 981 257
- FR-A1- 2 834 263
- US-A- 2 009 096
- US-A- 2 012 647
- US-A- 2 077 943
- US-A- 2 140 750

## Beschreibung

Die vorliegende Erfindung betrifft ein Bremssystem, insbesondere eine Spreizkeiltrommelbremse für Nutzfahrzeuge.

Bremssysteme und unter diesen Spreizkeiltrommelbremsen sind aus dem Stand der Technik bereits bekannt. Dabei wird eine keilförmige Geometrie von einem Bremszylinder angetrieben, mit einer Kraft beaufschlagt und zwischen zwei Kraftübertragungselemente gepresst, welche mit den Bremsbacken einer Trommelbremse in Verbindung stehen und diese nach außen gegen die Innenseite der Bremstrommel pressen. Zur Kraftübertragung zwischen dem keilförmigen Übertragungselement und den Bremsbacken werden dabei bisher Wälzkörper eingesetzt, welche entlang der keilförmigen Geometrie des Übertragungselements rollen und eine Kraft zwischen dem Übertragungselement und den Bremsbacken übertragen. Es hat sich gezeigt, dass die aus dem Stand der Technik bekannten Bremssysteme insbesondere bezüglich ihrer Baugröße nachteilig sind, da die Anordnung der Wälzkörper zusammen mit den erforderlichen Wälzkörperkäfigen einen sehr großen Bauraumbedarf aufweist. Darüber hinaus ist die Herstellung solcher Bremssysteme aufwändig, da die erhöhte Anzahl von Bauteilen und mitunter filigrane Geometrien insbesondere im Bereich des Wälzkörperkäfigs nicht nur eine Vielzahl von separat zu fertigenden Bauteilen erfordern, sondern auch einen relativ hohen Zeitaufwand bei der Montage oder Demontage des Bremssystems. Es besteht daher ein Verbesserungsbedarf für Bremssysteme hinsichtlich des vom Bremssystem beanspruchten Bauraumes und hinsichtlich der Einfachheit der Fertigung bzw. der Reduzierung des Montage- bzw. Demontageaufwandes.

FR 2 834 263 A1 offenbart ein Bremssystem umfassend ein Übertragungselement und ein Kolbenelement, wobei das Übertragungselement längs einer Übertragungsachse verlagerbar geführt ist, wobei das Übertragungselement eine Übertragungsfläche aufweist, die geneigt zur Übertragungsachse ausgerichtet ist, wobei sich das Kolbenelement mit einer Kolbenfläche im Wesentlichen unmittelbar an der Übertragungsfläche abstützt, wobei eine Verlagerung des Übertragungselements längs der Übertragungsachse eine Verlagerung des Kolbenelements im Wesentlichen quer zur Übertragungsachse bewirkt.

Die Dokumente FR 981 257 A, FR 973 248 A, US 2 009 096 A, US 2 140 750 A, US 2 077 943 A, US 2 012 647 A offenbaren weiteren Stand der Technik zu Bremssystemen.

Aufgabe der vorliegenden Erfindung ist die Bereitstellung eines Bremssystems mit verringertem Bauraumbedarf und reduziertem Gewicht, welches in der Lage ist dennoch die erforderlichen Bremskräfte aufzubringen und einfach montierbar ist.

Diese Aufgaben werden gelöst mit einem Bremssystem gemäß Anspruch 1. Weitere Vorteile und Merkmale der Erfindung ergeben sich aus den abhängigen Ansprüchen.

Erfindungsgemäß umfasst das Bremssystem, insbesondere eine Spreizkeiltrommelbremse für Nutzfahrzeuge, ein Übertragungselement und ein Kolbenelement, wobei das Übertragungselement längs einer Übertragungsachse verlagerbar geführt ist, wobei das Kolbenelement quer zur Übertragungsachse verlagerbar geführt ist, wobei das Übertragungselement eine Übertragungsfläche aufweist, die geneigt zur Übertragungsachse ausgerichtet ist, wobei sich das Kolbenelement mit einer Kolbenfläche an der Übertragungsfläche im Wesentlichen unmittelbar abstützt, wobei eine Verlagerung des Übertragungselements längs der Übertragungsachse eine Verlagerung des Kolbenelements im Wesentlichen quer zur Übertragungsachse bewirkt. Das Übertragungselement ist vorteilhafterweise das Spreizkeilelement einer Spreizkeiltrommelbremse und ist längs einer Übertragungsachse verlagerbar geführt, wobei das Übertragungselement mit Vorteil eine Haupterstreckungsrichtung aufweist, welche parallel zur Übertragungsachse verläuft. An einem ersten Ende des Übertragungselements greift dieses bevorzugt an einem Bremszylinder ein und wird von dem Bremszylinder mit einer Betätigungskraft beaufschlagt. In der, der Betätigungskraft des Bremszylinders entgegenwirkenden Richtung wird das Übertragungselement mit Vorteil mit einer Rückstellkraft beaufschlagt, welche das Übertragungselement aus einem Eingriff mit dem Kolbenelement heraus zu verlagern sucht. An seinem zweiten, dem ersten Ende gegenüberliegenden Ende weist das Übertragungselement eine Übertragungsfläche auf, welche geneigt zur Übertragungsachse ausgerichtet ist. Mit Vorteil weist die Übertragungsfläche keinen Abschnitt auf, welcher parallel zur Übertragungsachse ausgerichtet ist. Eine verlagerbare Führung des Übertragungselements längs der Übertragungsachse bedeutet mit anderen Worten, dass eine Verlagerung des Übertragungselements nur in dieser Richtung möglich ist, während das Übertragungselement quer zur Übertragungsachse durch beispielsweise das Gehäuse des Bremssystems entsprechend abgesichert bzw. abgestützt ist. Das Kolbenelement des Bremssystems ist dabei vorzugsweise ebenfalls in dessen Gehäuse angeordnet und gegen Verlagerung längs bzw. parallel zur Übertragungsachse gesichert und in einer Richtung im Wesentlichen quer zur Übertragungsachse verlagerbar. Im Rahmen der vorliegenden Erfindung bedeutet im "Wesentlichen quer zur Übertragungsachse", dass Fertigungstoleranzen sowie eine leicht schräge Verlagerungsrichtung bezogen auf die Übertragungsachse vorgesehen sein können. In diesem Zusammenhang sind insbesondere Winkel von 80° bis 100° zwischen der Verlagerungsrichtung des Kolbenelements und der Übertragungsachse im Rahmen der vorliegenden Erfindung zulässig, da auf diese Weise ungleichmäßige Kräfte an den Bremsbacken ausgeglichen werden können. Das Kolbenelement weist eine Kolbenfläche auf, welche sich zumindest bereichsweise an der Übertragungsfläche des Übertragungselements abstützt. Aufgrund der, bezogen auf die Übertragungsachse, geneigten Ausrichtung der Übertragungsfläche führt eine Verlagerung des Übertragungselements längs der Übertragungsachse zu einer Verlagerung des Kolbenelements quer zur Übertragungsachse. Mit anderen Worten stützt sich das Kolbenelement derart am Übertragungselement und an dessen Übertragungsfläche ab, dass zu Beginn einer Verlagerung des Übertragungselements das Kolbenelement zunächst mit einem Abschnitt der Übertragungsfläche in Verbindung steht, welcher näher an der Übertragungsachse angeordnet ist als nach einer weiteren Verlagerung des Übertragungselements längs der Übertragungsachse, nach welcher das Kolbenelement mit einem Abschnitt der Übertragungsfläche in Verbindung steht, welcher weiter von der Übertragungsachse entfernt ist. Bei dieser Verlagerungsbewegung des Übertragungselements gleitet folglich das Kolbenelement im Wesentlichen unmittelbar auf der Übertragungsfläche des Übertragungselements. Dabei bedeutet "im Wesentlichen unmittelbar", dass insbesondere keine rotierenden Körper, wie beispielsweise Wälzkörper, zwischen der Übertragungsfläche und der Kolbenfläche angeordnet sind, um die Kraft zwischen Übertragungselement und Kolbenelement zu übertragen. Weiterhin bevorzugt ist auch kein rotierendes Zwischenstück zwischen der Kolbenfläche und der Übertragungsfläche angeordnet. Durch die Weglassung von zwischen der Kolbenfläche und der Übertragungsfläche angeordneten Bauteilen kann insbesondere der Bauraumbedarf des Bremssystems deutlich reduziert werden, wobei auch das Gehäuse des Bremssystems kleiner ausgelegt werden kann und auf diese Weise auch Gewicht eingespart werden kann. Im Rahmen der vorliegenden Erfindung ist es aber vorgesehen, dass zwischen der Kolbenfläche und der Übertragungsfläche ein Schmierfilm bzw. eine schmierende Substanz eingebracht ist, welche die Gleitreibung zwischen der Kolbenfläche und der Übertragungsfläche reduziert. Auf diese Weise kann insbesondere auch der Verschleiß an den jeweiligen Oberflächen des Übertragungselements und des Kolbenelements reduziert werden.

Erfindungsgemäß ist die Übertragungsfläche und/oder die Kolbenfläche gerundet ausgebildet. Im bevorzugten Fall, dass zumindest eine der Flächen, Übertragungsfläche oder Kolbenfläche, gerundet ausgebildet ist, lässt sich insbesondere die zwischen Übertragungsfläche und Kolbenfläche ausgebildete Gleitfläche reduzieren. Auf diese Weise kann insbesondere der Gleitwiderstand des Bremssystems zwischen Übertragungsfläche und Kolbenfläche reduziert werden. In einer bevorzugten Ausführungsform ist sowohl die Übertragungsfläche als auch die Kolbenfläche zumindest abschnittsweise gerundet ausgebildet. Bei dieser Ausführungsform kann mit Vorteil zum einen die Kontaktfläche zwischen Übertragungsfläche und Kolbenfläche reduziert werden und zum anderen ein verschiedener Anstieg der Übertragungsfläche bezogen auf die Übertragungsachse bei verschiedenen Verlagerungspositionen des Übertragungselements längs der Übertragungsachse eingestellt werden. So kann vorteilhafterweise eine progressive Kennlinie zwischen der an dem Übertragungselement anzulegenden Kraft und einer daraus resultierenden Kraft, welche das Kolbenelement von der Übertragungsachse weg verlagert, eingestellt werden. Mit anderen Worten ist der Anstieg am distalen Ende des Übertragungselements, mit welchem die Übertragungsfläche von der Übertragungsachse absteht, größer als an dem, dem distalen Ende des Übertragungselements gegenüberliegenden Abschnitt der Übertragungsfläche. Dies sorgt dafür, dass bei Beaufschlagen des Übertragungselements mit einer Kraft durch den Bremszylinder, dieses sich zunächst mit einem hohen Anstieg seiner Übertragungsfläche gegenüber dem Kolbenelement verlagert und das Kolbenelement zunächst sehr stark von der Übertragungsachse weg verlagert wird, wobei bei Erreichen der maximalen, durch das Bremssystem aufzubringenden Bremskraft bei der maximalen Verlagerung des Übertragungselements längs der Übertragungsachse diese bei linear zunehmender Kraft am Übertragungselement eine exponentiell gesteigerte Kraft auf das Kolbenelement überträgt. Bei dieser bevorzugten Ausführungsform ist das entsprechende Wegdiagramm, das heißt Verlagerungsweg des Kolbenelements über den Verlagerungsweg des Übertragungselements aufgetragen entsprechend degressiv. Die Rundung der Übertragungsfläche und/oder der Kolbenfläche ist vorzugsweise zylinderförmig, wobei sich ein bevorzugter linienförmiger oder rechteckiger Kontaktbereich zwischen dem Kolbenelement und dem Übertragungselement ergibt. Auf diese Weise können höhere Kräfte übertragen werden, wobei jedoch eine höhere Gleitreibung in Kauf genommen wird. Besonders bevorzugt ist die Rundung der Übertragungsfläche und/oder der Kolbenfläche ballig ausgebildet, wobei ballig im vorliegenden Fall als kugelschalenförmig oder auch als tonnenförmig zu verstehen ist. Bei dieser bevorzugten Ausführungsform ergibt sich ein punktförmiger oder kreisförmiger oder elliptischer Kontaktbereich zwischen dem Kolbenelement und dem Übertragungselement, wobei mit Vorteil eine sehr geringe Gleitreibung auftritt.

In einer besonders bevorzugten Ausführungsform kann die Rundung der Übertragungsfläche und/oder der Kolbenfläche auch in einer Aneinanderreihung von jeweils geradlinigen Abschnitten bestehen, die jeweils um einen von der Geraden abweichenden Winkel von 0° bis 10°, vorzugsweise 0° bis 5° verschwenkt sind und aneinander angrenzen. Dabei bildet die Reihe von linearen Abschnitten oder, mit anderen Worten, bevorzugt geradlinigen Abschnitten der Übertragungsfläche und/oder der Kolbenfläche eine bogenförmige Geometrie aus. Insbesondere bevorzugt können dabei die Abschnitte der Übertragungsfläche und/oder der Kolbenfläche als Tangenten eines Kreisbogenabschnitts ausgebildet sein bzw. angeordnet sein.

In einer weiteren bevorzugten Ausführungsform weist die Übertragungsfläche oder die Kolbenfläche eine konkave Rundung auf, wobei die jeweils andere Fläche, also Kolbenfläche oder Übertragungsfläche, eine konvexe Rundung aufweist, wobei der Rundungsradius der konvexen Rundung bevorzugt kleiner ist als der Rundungsradius der konkaven Rundung. Als Rundungsradius wird in diesem Fall vorzugsweise der mittlere Rundungsradius angenommen, wobei es im Rahmen der vorliegenden Erfindung vorgesehen sein kann, dass sich der tatsächliche, lokale Rundungsradius entlang einer Rundung ändert. Durch die bevorzugte Kombination einer konkaven Rundung an einem der Bauteile (Übertragungselement oder Kolbenelement) mit einer konvexen Rundung an dem jeweils anderen Bauteil (Übertragungselement oder Kolbenelement) kann insbesondere die Hertz'sche Pressung, bzw. Spannungsspitzen im Material verursacht durch Flächenpressung, reduziert werden, da eine Fläche die jeweils andere korrespondierende Fläche immer zumindest bereichsweise umgibt.

In einer weiterhin bevorzugten Ausführungsform weist die Übertragungsfläche oder die Kolbenfläche eine erste Rundung mit einem ersten mittleren Rundungsradius auf, wobei die jeweils andere Fläche eine zweite Rundung mit einem zweiten mittleren Rundungsradius aufweist, wobei der erste mittlere Rundungsradius zum zweiten mittleren Rundungsradius in einem Verhältnis von 0,4 bis 1, bevorzugt 0,5 bis 0,95 und besonders bevorzugt von ca. 0,7 bis 0,85 steht. Mit anderen Worten weist somit entweder die Übertragungsfläche oder die Kolbenfläche einen ersten mittleren Rundungsradius auf. Die Fläche, die jeweils nicht den ersten mittleren Rundungsradius aufweist, weist demnach vorzugsweise den zweiten mittleren Rundungsradius auf. Besonders bevorzugt ist der erste mittlere Rundungsradius dabei kleiner gleich dem zweiten mittleren Rundungsradius, wobei insbesondere bevorzugt ein Größenverhältnis von 0,7 bis 0,85 vorgesehen ist. Durch die bevorzugte Kombination eines ersten mittleren Rundungsradius, welcher in einem Verhältnis von 0,4 bis 1 zum zweiten mittleren Rundungsradius steht, lässt sich mit Vorteil eine besonders günstige Geometrie der Berührungsfläche zwischen der Übertragungsfläche und der Kolbenfläche realisieren. Hierzu kann insbesondere der auftretende Gleitwiderstand beim Betrieb des Bremssystems durch die Reibung der Kolbenfläche an der Übertragungsfläche reduziert werden und gleichzeitig die Beschädigung der beiden Flächen durch die auftretende Hertz'sche Pressung reduziert werden. Das besonders bevorzugte Verhältnis von 0,5 bis 0,95 des ersten mittleren Rundungsradius zum zweiten mittleren Rundungsradius hat sich dabei insbesondere zum Einsatz in Spreizkeiltrommelbremsen herkömmlicher Bauart bewährt, wobei bei diesen Spreizkeiltrommelbremsen die bisher übliche Anordnung von Wälzkörpern zwischen dem Spreizkeil und den jeweiligen Kolbenelementen der Bremsbacken durch die erfindungsgemäße Anordnung mit einer zumindest bereichsweisen Rundung an der Übertragunsfläche und/oder Kolbenfläche ersetzt werden kann. Das insbesondere bevorzugte Verhältnis von 0,7 bis 0,85 hat sich dabei in Versuchen der Anmelderin bei Spreizkeiltrommelbremsen in Nutzfahrzeugen bewährt, wobei insbesondere höhere Bremskräfte erreicht werden konnten, als dies bei Spreizkeiltrommelbremsen mit Wälzkörpern bisher möglich war.

Mit Vorteil ist der Verlauf der Rundung der Übertragungsfläche und/oder der Kolbenfläche nicht linear. Als nicht linearer, oder mit anderen Worten nicht gleichmäßiger oder nicht gleichförmiger Verlauf der Rundung der Übertragungsfläche und/oder der Kolbenfläche wird eine Geometrie angesehen, welche verschiedene Rundungsradien und/oder Rundungen kombiniert mit geradlinigen Abschnitten aufweist. Der Vorteil dieser nicht linear verlaufenden Rundung ist, dass eine bestimmte Bewegungs- und Kraftkennlinie zwischen dem Kolbenelement und dem Übertragungselement einstellbar ist. Dabei können gezielt bestimmte Anstiege der Übertragungsfläche und/oder der Kolbenfläche für bestimmte Stellungen des Übertragungselements in dem Bremssystem eingerichtet werden, die eine günstige Kraftübertragung bei geringem Verschleiß der kraftübertragenden Flächen am Übertragungselement und am Kolbenelement erlauben.

Weiterhin bevorzugt weist der Rundungsradius ausgewählter Abschnitte der Übertragungsfläche und/oder der Kolbenfläche verschiedene Werte auf, und/oder es ist ein nicht gerundeter Abschnitt vorgesehen. Die Ausgestaltung der Rundung sowohl der Übertragungsfläche als auch der jeweils korrespondierenden Kolbenfläche ist mit anderen Worten ein Mittel, um die Bewegungskennlinie der Bewegung bzw. Verlagerung des Kolbenelements abhängig von einer Verlagerung des Übertragungselements einstellen zu können. Mit anderen Worten bedeutet dies, dass, wenn das Übertragungselement durch den Bremszylinder um einen bestimmen Weg verlagert wird, die Ausgestaltung bzw. der Anstieg der Übertragungsfläche längs der Übertragungsachse eine Kenngröße zum Einstellen einer bestimmten Verlagerung des Kolbenelements quer zur Übertragungsachse um einen bestimmten Weg ist. In diesem Zusammenhang versteht es sich, dass bei steilerem Anstieg der entsprechenden Abschnitte der Kolbenfläche längs der Übertragungsachse, der von einem bestimmten Verlagerungsweg des Übertragungselements verursachte Verlagerungsweg des Kolbenelements quer zur Übertragungsachse umso größer ist. Dabei ist die Aneinanderreihung verschieden gekrümmter bzw. verschieden gerundeter Abschnitte an der Übertragungsfläche und/oder der Kolbenfläche ein Mittel, zum einen sowohl die günstige Flächenpressungs- und Gleitreibungswerte aufgrund der Rundung der jeweiligen Flächen mit einer nichtlinearen Bewegungskennlinie des Kolbenelements abhängig von der Bewegung des Übertragungselements kombinieren zu können. Auf diese Weise lässt sich beispielsweise einstellen, dass zu Beginn eines Bremsvorganges ein bestimmter Verlagerungsweg des Übertragungselements das Kolbenelement einen möglichst großen Weg zurücklegen soll, wobei bei diesem großen Weg relativ geringe Kräfte am Kolbenelement zu erwarten sind und es schnell zu einem Eingriff einer vom Kolbenelement angetriebenen Bremsbacken mit der Innenseite einer Bremstrommel kommt. Nach einer Weiterverlagerung des Übertragungselements bis hin zum Zustand des Bremssystems, in dem eine Vollbremsung bzw. die maximale Bremskraft erreicht werden soll, kann es bevorzugt sein, dass der Anstieg der Übertragungsfläche längs der Übertragungsachse relativ gering ist, wobei durch einen bestimmten Verlagerungsweg des Übertragungselements nur ein relativ geringer Verlagerungsweg des Kolbenelements bei gleichzeitig aber sehr hohen, auf das Kolbenelement wirkenden Kräften verursacht wird, wodurch insbesondere bevorzugt eine besonders hohe Bremskraft mit dem Bremssystems erreichbar ist. Durch die nicht-lineare Gestaltung der Rundung der Übertragungsfläche und/oder der Kolbenfläche ist es somit möglich, ausgehend von einer gleichmäßigen bzw. gleichförmigen Verlagerung des Übertragungselements eine nicht gleichförmige, oder nicht proportionale Bewegungscharakteristik bzw. Bewegungskennlinie des Kolbenelements vorzusehen, welche zu einer bestimmten Verlagerung der Bremsbacken und somit zu einer bevorzugten Bremscharakteristik führt. Dabei kann es auch bevorzugt sein, dass zwischen zwei gerundeten Abschnitten der Rundung der Übertragungsfläche und/oder der Kolbenfläche ein nicht gerundeter Abschnitt vorgesehen ist, welcher somit zu einem geradlinigen Anstieg der Bewegungscharakteristik des Kolbenelements führt. Auf diese Weise lassen sich insbesondere dann, wenn die jeweils zum geradlinigen Abschnitt eines der Elemente (Kolbenelement oder Übertragungselement) korrespondierende Fläche des jeweils anderen Elements gerundet ist, die Vorteile einer gerundeten Ausbildung der Übertragungsfläche und/oder der Kolbenfläche mit einem geradlinigen Anstieg und somit einer mit zunehmender Kraft am Übertragungselement gleichförmig ansteigenden Kraft am Kolbenelement kombinieren.

Erfindungsgemäß liegt in einem ersten Zustand des Bremssystems die Übertragungsfläche in einem ersten Übertragungsabschnitt an einem ersten Kolbenabschnitt der Kolbenfläche an, wobei in einem zweiten Zustand des Bremssystems die Übertragungsfläche in einem zweiten Übertragungsabschnitt an einem zweiten Kolbenabschnitt der Kolbenfläche anliegt, wobei sich der erste Übertragungsabschnitt im Wesentlichen um einen ersten Winkel zur Übertragungsachse verschwenkt erstreckt, wobei sich der zweite Übertragungsabschnitt im Wesentlichen um einen zweiten Winkel zur Übertragungsachse verschwenkt erstreckt, wobei der zweite Winkel vorzugsweise einen kleineren Betrag aufweist als der erste Winkel. Der erste Zustand des Bremssystems ist dabei insbesondere der Zustand bei Beginn eines Bremsvorganges, wobei in diesem Zustand vorzugsweise das Kolbenelement am nächsten an der Übertragungsachse positioniert ist und das Übertragungselement gerade mit dem Kolbenelement in Eingriff gelangt, ohne jedoch bereits das Kolbenelement quer zur Übertragungsachse zu verlagern. Der zweite Zustand des Bremssystems ist vorzugsweise der Zustand, bei welchem die maximale Bremskraft durch das Bremssystem verursacht bzw. aufgebracht wird. Insbesondere bevorzugt ist dabei das Übertragungselement maximal längs der Übertragungsachse vom Bremszylinder weg verlagert und das Kolbenelement weist seinen größten Abstand von der Übertragungsachse auf. Im ersten Zustand des Bremssystems korrespondiert dabei die Übertragungsfläche in einem ersten Übertragungsabschnitt mit einem ersten Kolbenabschnitt der Kolbenfläche, wobei der erste Übertragungsabschnitt und vorzugsweise auch der erste Kolbenabschnitt um einen ersten Winkel zur Übertragungsachse verschwenkt ausgerichtet sind. Analog hierzu liegt im zweiten Zustand des Bremssystems die Übertragungsfläche in einem zweiten Übertragungsabschnitt an einem zweiten Kolbenabschnitt der Kolbenfläche an. Dabei erstreckt sich der zweite Übertragungsachse und vorzugsweise auch der zweite Kolbenabschnitt im Wesentlichen um einen zweiten Winkel zur Übertragungsachse verschwenkt. "Im Wesentlichen verschwenkt um einen ersten bzw. zweiten Winkel" bedeutet in diesem Zusammenhang, dass, wenn der erste und/oder der zweite Übertragungsabschnitt leicht gekrümmt ausgebildet ist, der erste bzw. der zweite Winkel jeweilig an einer Geraden, welche durch die Endpunkte der jeweiligen Krümmung des ersten oder des zweiten Übertragungsabschnitts verläuft, gemessen werden soll. Der erste Winkel weist dabei vorzugsweise einen größeren Betrag auf als der zweite Winkel, wodurch mit anderen Worten der erste Übertragungsabschnitt steiler bezogen auf die Übertragungsachse ausgerichtet ist als der zweite Übertragungsabschnitt. Mit dieser bevorzugten Ausführungsform kann insbesondere erreicht werden, dass zu Beginn eines Bremsvorganges bei konstanter Verlagerungsgeschwindigkeit des Übertragungselements längs der Übertragungsachse ein größerer Verlagerungsweg des Kolbenelements erreicht wird als im zweiten Zustand des Bremssystems. Im zweiten Zustand des Bremssystems können bei gleichmäßiger Verlagerung des Übertragungselements größere Kräfte an das Kolbenelement übertragen werden, wodurch eine höhere Bremskraft durch das Bremssystem erreicht wird. Es wird auf diese Weise sowohl das Ansprechverhalten der Bremse im ersten Zustand des Bremssystems verbessert als auch die mögliche zu erreichende Maximalbremskraft des Bremssystems.

In einer weiteren bevorzugten Ausführungsform liegen bei einer Betätigung des Bremssystems die Übertragungsfläche und die Kolbenfläche in einem Gleitabschnitt aufeinander, wobei der Gleitabschnitt ein 0,05- bis 0,3-faches, vorzugsweise ein 0,05- bis 0,2-faches und insbesondere bevorzugt ein ca. 0,08- bis 0,12-faches der Übertragungsfläche und/oder der Kolbenfläche einnimmt. Der Gleitabschnitt verschiebt sich verständlicherweise während einer Verlagerung des Übertragungselements längs der Übertragungsachse vorzugsweise sowohl entlang der Übertragungsfläche als auch entlang der Kolbenfläche. Dabei bestimmt die Fläche bzw. die Querschnittsfläche des Gleitabschnitts die für die Gleitreibung zwischen Übertragungselement und Kolbenelement relevante Gleitreibungsfläche. Im Rahmen der vorliegenden Erfindung ist es insbesondere bevorzugt, diese Gleitfläche möglichst gering zu halten, wobei aber gleichzeitig die Gleitfläche als effektive Kraftübertragungsfläche zwischen Übertragungselement und Kolbenelement nicht zu klein gehalten werden darf, um die Auswirkungen der Flächenpressung und aus dieser resultierende Materialschädigungen gering zu halten. Es hat sich im Rahmen der vorliegenden Erfindung ein Flächenverhältnis von 0,05 bis 0,3 des Gleitabschnitts zur Querschnittsfläche von Übertragungsfläche oder Kolbenfläche als vorteilhaft herausgestellt, um einerseits die Gleitreibung zwischen Kolbenelement und Übertragungselement gering zu halten, und andererseits ausreichend hohe Kräfte zwischen den beiden Flächen übertragen zu können. Das Flächenverhältnis von 0,05 bis 0,2 hat sich dabei insbesondere im Bereich von Spreizkeiltrommelbremsen für Nutzfahrzeug bewährt, bei welchen herkömmliche Materialien wie beispielsweise herkömmlicher gehärteter Stahl und herkömmlichen Schmiermitteln zum Einsatz gelangen sollen, als vorteilhaft herausgestellt. Das besonders bevorzugte Verhältnis von 0,08 bis 0,12 kann dabei vorteilhafterweise für hoch belastete Bremssysteme eingesetzt werden, bei denen ein besonders hoher Anspruch an die Schnellgängigkeit der Bremse gestellt wird, wobei es insbesondere zu einer nur sehr geringen Gleitreibung im Vergleich zu den Bremssystemen kommen darf, bei welchen ein 0,3faches der Fläche des Gleitabschnitts bezogen auf die Übertragungsfläche und/oder die Kolbenfläche zulässig ist.

Besonders bevorzugt ist die Geometrie der Übertragungsfläche und/oder der Kolbenfläche derart gestaltet, dass der Gleitabschnitt im ersten Zustand des Bremssystems kleiner ist als im zweiten Zustand des Bremssystems. Der Gleitabschnitt, also der Abschnitt, welcher zwischen Übertragungsfläche und Kolbenfläche die entsprechende Verlagerungskraft, welche auf das Kolbenelement wirkt, überträgt, ist somit im ersten Zustand des Bremssystems vorzugsweise kleiner als im zweiten Zustand. Auf diese Weise kann im ersten Zustand des Bremssystems eine geringere Gleitreibung zwischen Übertragungselement und Kolbenelement erreicht werden, während im zweiten Zustand des Bremssystems die höheren, zwischen Übertragungsfläche und Kolbenfläche wirkenden Kräfte auf einen größeren Gleitabschnitt verteilt übertragen werden. Hierdurch kann die durch Hertz'sche Pressung verursachte Maximalspannung im Material des Übertragungselements und des Kolbenelements reduziert werden und die Lebensdauer beider Bauteile erhöht werden. Das bevorzugte Mittel zur Ausgestaltung der Geometrie der Übertragungsfläche und der Kolbenfläche ist dabei die entsprechende Anpassung der Rundung der jeweils korrespondierenden Abschnitte von Kolbenfläche und Übertragungsfläche. Somit kann es insbesondere vorgesehen sein, dass in dem Bereich der Übertragungsfläche und der Kolbenfläche, welche im ersten Zustand miteinander korrespondieren, kleinere Rundungsradien und somit eine "spitzwinkligere" Übertragungsgeometrie an der Übertragungsfläche und der Kolbenfläche vorgesehen sind als in den Bereichen der Übertragungsfläche und/oder der Kolbenfläche, welche im zweiten Zustand des Bremssystems miteinander korrespondieren. Vorzugsweise ist somit beispielsweise der Rundungsradius der Übertragungsfläche in seinem dem Bremszylinder zugewandten Ende größer als in seinem, dem Bremszylinder abgewandten Ende.

Insbesondere bevorzugt umfasst die Übertragungsfläche und/oder die Kolbenfläche ein gehärtetes Material. Als gehärtetes Material kann hierbei insbesondere eine hart verchromte Oberflächenbeschichtung vorgesehen sein, wobei diese Oberflächenbeschichtung direkt mit dem Material der Übertragungsfläche und/oder der Kolbenfläche ausgebildet sein kann. Bei dieser Ausführungsform ist vorteilhafterweise die Herstellung des Kolbenelements bzw. des Übertragungselements möglichst einfach zu gestalten. Weiterhin bevorzugt kann das gehärtete Material auch in Form einer Beschichtung, wie beispielsweise einer hartverchromten Oberflächenbeschichtung, auf die Übertragungsfläche und/oder die Kolbenfläche aufgebracht sein, wobei sich insbesondere zur Reparatur abgenutzter Übertragungselemente und Kolbenelemente diese Beschichtung in einfachen und relativ kostengünstig erneuern lässt und die Betriebskosten für ein Bremssystem gemäß der vorliegenden Erfindung reduziert werden können. Weiterhin bevorzugt können auch keramische Abschnitte an der Übertragungsfläche und/oder der Kolbenfläche vorgesehen sein, wobei Keramik insbesondere zur Übertragung von Druckkräften bei gleichzeitig nur geringer Gleitreibung und geringem Reibungsverschleiß einsetzbar ist.

In einer besonders bevorzugten Ausführungsform weist die Übertragungsfläche einen übertragungsseitigen Aufnahmebereich und/oder die Kolbenfläche einen kolbenseitigen Aufnahmebereich auf, welcher zur Bereitstellung und Verteilung eines Schmiermittels zwischen der Übertragungsfläche und der Kolbenfläche ausgelegt ist. Der übertragungsseitige Aufnahmebereich und/oder der kolbenseitige Aufnahmebereich ist insbesondere bevorzugt mit Schmiermitteltaschen ausgestattet, in welchen ein Schmiermittel bevorratet werden kann und kontinuierlich zwischen der Übertragungsfläche und der Kolbenfläche verteilt wird. Insbesondere bevorzugt kann der übertragungsseitige Aufnahmebereich und/oder der kolbenseitige Aufnahmebereich in die jeweilige Fläche eingebrachte Rillen umfassen, welche dafür ausgelegt sind, ein Schmiermittel wie beispielsweise ein Fett oder ein zähflüssiges Öl gleichmäßig über die Übertragungsfläche und/oder die Kolbenfläche zu verteilen, während das Bremssystem sich im Einsatz befindet und die Übertragungsfläche sich relativ zur Kolbenfläche verlagert. In diesem Zusammenhang hat es sich als vorteilhaft herausgestellt, dass eine spezielle Mikro-Oberflächenstruktur an der Übertragungsfläche und/oder an der Kolbenfläche vorgesehen ist, welche zum einen die hohen Flächenlasten, die zwischen der Übertragungsfläche und der Kolbenfläche wirken, ohne Beschädigungen übersteht und zum anderen die gleichmäßige Verteilung eines Schmiermittels begünstigt, wodurch insbesondere der Verschleiß an der Übertragungsfläche und an der Kolbenfläche deutlich reduziert werden kann und die Gleitreibung auf ein Minimum sinkt. Als Mikro-Oberflächenstruktur werden insbesondere nutförmige Kanäle in der Oberfläche der Übertragungsfläche und/oder der Kolbenfläche bezeichnet, wobei die Kanäle eine Breite und eine Tiefe von 100 NM bis 2 µm aufweisen.

Insbesondere bevorzugt ist zwischen der Übertragungsfläche und der Kolbenfläche ein Schmierfilm vorgesehen. Dabei hat es sich gezeigt, dass insbesondere die gerundete oder vorzugsweise ballige Oberflächenform sowohl an der Übertragungsfläche als auch an der Kolbenfläche dazu geeignet ist, in jedem Bewegungszustand des Übertragungselements relativ zum Kolbenelement dafür zu sorgen, dass der gleichmäßige Schmierfilm zwischen der Übertragungsfläche und der Kolbenfläche nicht abreißt und somit ein direkter Metall-auf-Metall- oder Metall-auf-Keramik-Kontakt zwischen den beiden Flächen stets vermieden wird. Bei einem direkten Metall-auf-Metall-Kontakt oder Metall-auf-Keramik-Kontakt zwischen der Übertragungsfläche und der Kolbenfläche kommt es zu besonders nachteiligem Verschleiß, und es ist im Rahmen der Erfindung bevorzugt, dass stets ein Schmierfilm zwischen beiden Flächen besteht, welcher sowohl die Gleitreibung vermindert als auch den Verschleiß reduziert. Insbesondere bevorzugt kann der Schmierfilm dabei auch aus einem Graphit oder einem graphitähnlichen, bzw. Graphit enthaltenden, Material bestehen, wobei insbesondere bevorzugt in die Übertragungsfläche und/oder die Kolbenfläche ein Grafitspeicher eingebracht sein kann, welcher je nach Bedarf schmierendes Graphit zwischen den beiden Flächen verteilt. Auch kann eine Beschichtung, beispielsweise Teflon-Beschichtung, vorgesehen sein.

Mit Vorteil weist das Übertragungselement eine zweite Übertragungsfläche auf, die vorzugsweise ebenensymmetrisch zur ersten Übertragungsfläche bezogen auf eine, durch die Übertragungsachse verlaufende Ebene ausgebildet ist. Das Übertragungselement dient mit Vorteil somit nicht nur dem Antrieb bzw. der Verlagerung eines Kolbenelements, sondern auch eines spiegelsymmetrisch zu diesem ausgerichteten und spiegelsymmetrisch zu dem ersten Kolbenelement verlagerbaren zweiten Kolbenelement. Die zweite Übertragungsfläche weist dabei vorzugsweise dieselben Eigenschaften auf wie die erste Übertragungsfläche und ist lediglich ebenensymmetrisch zur ersten Übertragungsfläche angeordnet.

In einer alternativ bevorzugten Ausführungsform kann es sein, dass das Übertragungselement eine zweite Übertragungsfläche aufweist, die vorzugsweise nicht ebenensymmetrisch zur ersten Übertragungsfläche bezogen auf eine durch die Übertragungsachse verlaufende Ebene ausgebildet ist. Diese Ausführungsform kann insbesondere dann vorteilhaft sein, wenn eine unterschiedliche Bremsencharakteristik für die in der Trommelbremse auflaufende Bremsbacke und die ablaufende Bremsbacke vorgesehen sein soll. Auf diese Weise kann beispielsweise die zweite Übertragungsfläche abschnittsweise einen größeren Anstieg bezogen auf die Übertragungsachse aufweisen als die erste Übertragungsfläche auf gleicher Höhe bezogen auf die Übertragungsachse. Somit kann vorteilhafterweise die auflaufende Bremsbacke später in Eingriff mit der Bremstrommel gebracht werden als die ablaufende Bremsbacke. Bei dieser Ausführungsform ist es weiterhin entscheidend, dass das Übertragungselement in der Trommelbremse jeweils mit der richtigen Einbauposition, das heißt, das beispielsweise die zweite Übertragungsfläche immer in Richtung der ablaufenden Bremsbacke bzw. in Richtung des Kolbenelements, welches die ablaufende Bremsbacke betätigt, ausgerichtet ist. Es empfiehlt sich daher, am Schaft des Übertragungselementes, welcher mit dem Bremszylinder in Eingriff gebracht werden kann, eine entsprechende Geometrie vorzusehen, welche die richtige Einbaulage signalisiert oder welche ohne Wahl der richtigen Einbaulage nicht in ein Gehäuse des Bremssystems eingeführt werden kann.

Besonders bevorzugt wird das Übertragungselement zur Einleitung eines Bremsvorganges von einem Bremszylinder mit einer Betätigungskraft beaufschlagt bzw. ist beaufschlagbar, um periodisch in Eingriff mit dem Kolbenelement zu gelangen. Als periodischer Eingriff wird in diesem Zusammenhang der normale Betrieb einer Bremse bezeichnet, welcher daraus besteht, dass an dem Bremszylinder eine Kraft aufgebaut wird, welche auf das Übertragungselement übertragen wird, wodurch das Übertragungselement das Kolbenelement oder die Kolbenelemente derart verlagert werden, dass eine oder vorzugsweise zwei Bremsbacken mit einer Bremstrommel in Eingriff gelangen, wobei anschließend die am Bremszylinder entwickelte Kraft auf Null reduziert wird, wobei das Übertragungselement und vorzugsweise auch das oder die Kolbenelement/e jeweils mit Rückstellelementen in ihre ursprüngliche Position, das heißt die Position vor Beginn des Bremsvorganges, zurückverlagert werden. Mit anderen Worten ist das Übertragungselement keine Nachstell- oder Justiervorrichtung. Vorzugsweise sind das Übertragungselement und das Kolbenelement durch die erfindungsgemäße Ausbildung der jeweiligen Kontaktflächen für einen periodischen Einsatz ausgelegt, indem vorzugsweise die Gleitreibung reduzierende und die Kraftübertragung optimierende Geometrien und ein Schmierfilm vorgesehen sind. Im Vergleich zu aus dem Stand der Technik bekannten Bremssystemen ist bei dem vorliegenden Bremssystem insbesondere ein geringerer Bauraumbedarf und durch die vorteilhafte Ausgestaltung der Kraftübertragungsflächen an dem Übertragungselement und dem Kolbenelement auch eine höhere Bremskraft möglich.

Besonders bevorzugt weist das Bremssystem ein Gehäuse auf, wobei das Übertragungselement in dem Gehäuse angeordnet und längs der Übertragungsachse in dem Gehäuse geführt ist, wobei das Kolbenelement in dem Gehäuse angeordnet ist und quer zur Übertragungsachse verlagerbar in dem Gehäuse geführt ist, wobei vorteilhafterweise das Gehäuse einstückig ausgebildet ist. Um die Kompaktheit des Bremssystems zu steigern, ist es besonders bevorzugt, dass sämtliche Systeme des Bremssystems in einem Gehäuse untergebracht sind bzw. umgeben werden. Dabei ist es besonders bevorzugt, dass zumindest das Übertragungselement und das Kolbenelement und eventuell an dem Übertragungselement oder dem Kolbenelement angreifende Rückstellelemente in dem Gehäuse untergebracht, verlagerbar geführt bzw. quer zu den Verlagerungsrichtungen jeweilig abgestützt sind. Weiterhin bevorzugt kann das Gehäuse auch dafür ausgelegt sein, dass in regelmäßigen Abständen ein Schmiermittel in den Innenraum des Gehäuses einbringbar ist, welches auf einfache Weise einen Schmierfilm zwischen der Übertragungsfläche und der Kolbenfläche bereitstellt. Hierzu ist das Gehäuse vorzugsweise mit Dichtungen ausgerüstet und weist einen Schmiernippel auf, wobei durch die entsprechenden Dichtungen, die beispielsweise zwischen dem Gehäuse und den jeweiligen Außenflächen des Kolbenelements und des Übertragungselement wirken, ein Austreten von Schmiermittel verhindert werden kann. Besonders bevorzugt ist dabei das Gehäuse einstückig ausgebildet. Dies ist insbesondere aufgrund der günstigen Fertigung des Gehäuses bevorzugt, da das Gehäuse als einstückiges Gussteil hergestellt werden kann, nur wenige weitere Bearbeitungsschritte erfordert, wodurch die Fertigungszeit deutlich reduziert werden kann. Weiterhin bevorzugt ist das Gehäuse somit auch optimal an die entsprechende Größe des Übertragungselements und der Kolbenelemente anpassbar, wobei insbesondere das Gewicht und der Bauraumbedarf des Gehäuses und des gesamten Bremssysteme deutlich reduziert werden kann.

Weitere Vorteile und Merkmale der vorliegenden Erfindung ergeben sich aus der nachfolgenden Beschreibung weiterer bevorzugte Ausführungsformen mit Bezug auf die beigefügten Figuren. Es versteht sich, dass Merkmale einzelner Ausführungsformen bzw. Figuren auch in anderen Ausführungsformen zum Einsatz gelangen können, sofern dies nicht explizit ausgeschlossen ist, oder sich aufgrund technischer Überlegungen verbietet. Es zeigen:
- Fig. 1a, 1b: zwei Ansichten einer bevorzugten Ausführungsform des erfindungsgemäßen Bremssystems,
- Fig. 2: eine vergrößerte Ansicht der in Fig. 1b gezeigten Ausführungsform
- Fig. 3: eine Ansicht einer weiteren bevorzugten Ausführungsform des erfindungsgemäßen Bremssystems, und
- Fig. 4a, 4b: zwei Ansichten von zwei weiteren bevorzugten Ausführungsformen des erfindungsgemäßen Bremssystems.

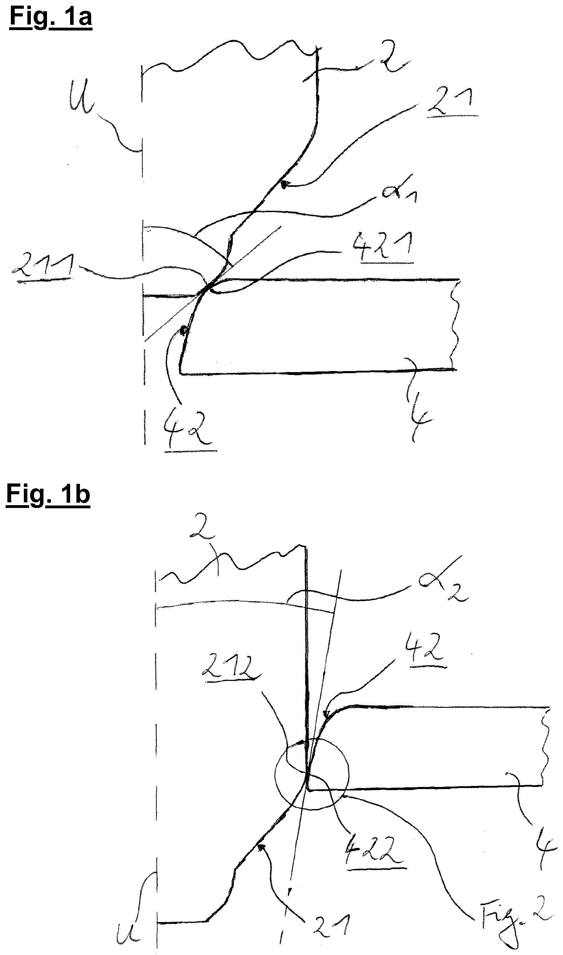

In den Figuren 1a und 1b ist in einfacher schematischer Weise dargestellt, wie das Übertragungselement 2 und das Kolbenelement 4 in einer bevorzugten Ausführungsform des erfindungsgemäßen Bremssystems zusammenwirken. Dabei ist in Fig. 1a der bevorzugte erste Zustand des Bremssystems gezeigt, das heißt mit anderen Worten der Zustand des Bremssystems, in dem ein Bremsvorgang beginnt oder eingeleitet wird. Das Übertragungselement 2 ist entlang der Übertragungsachse U verlagerbar in einem nicht gezeigten Gehäuse des Bremssystems geführt angeordnet. Ebenso ist das Kolbenelement 4 im Wesentlichen quer zur Übertragungsachse U verlagerbar in dem Gehäuse (nicht gezeigt) geführt angeordnet. Besonders bevorzugt ist das Kolbenelement 4 dabei senkrecht zur Übertragungsachse U verlagerbar angeordnet und gegen Verlagerung längs der Übertragungsachse U durch das Gehäuse gesichert bzw. abgestützt. Im ersten Zustand des Bremssystems liegt das Übertragungselement 2 mit seiner Übertragungsfläche 21 in einem ersten Übertragungsabschnitt 211 der Übertragungsfläche 21 an dem Kolbenelement 4 an. Das Kolbenelement 4 liegt mit einem ersten Kolbenabschnitt 421 seiner Kolbenfläche 42 an dem ersten Übertragungsabschnitt 211 an. Besonders bevorzugt weist dabei die zwischen dem ersten Übertragungsabschnitt 211 und dem ersten Kolbenabschnitt 421 ausgebildete Kraftübertragungsfläche eine Neigung zur Übertragungsachse, welche mit einem Winkel α₁ zur Übertragungsachse U gemessen werden kann. Im zweiten Zustand des Bremssystems, weleher in Fig. 1b gezeigt ist, hat sich das Übertragungselement 2 nach in der Figur unten verlagert und dabei das Kolbenelement 4 quer zur Übertragungsachse U nach rechts hin verlagert. Im zweiten Zustand greift dabei das Übertragungselement 2 mit einem zweiten Übertragungsabschnitt 212 der Übertragungsfläche 21 an einem zweiten Kolbenabschnitt 422 der Kolbenfläche 42 an. Die im zweiten Übertragungsabschnitt 212 bzw. im zweiten Kolbenabschnitt 422 gebildete Kraftübertragungsfläche zwischen dem Übertragungselement 2 und dem Kolbenelement 4 erstreckt sich dabei im Wesentlichen um einen zweiten Winkel α₂ zur Übertragungsachse U verschwenkt. Besonders bevorzugt ist dabei der zweite Winkel α₂ kleiner als der erste Winkel α₁. Weiterhin bevorzugt ist in Fig. 1a und Fig. 1b die nicht lineare Ausgestaltung der Rundung der Übertragungsfläche 21 dargestellt. So kann eine bevorzugte Bremscharakteristik eines Bremssystems eingestellt werden, indem die Verlagerungskennlinie zwischen einer Verlagerung des Übertragungselements 2 und einer Verlagerung des Kolbenelements 4 über beispielsweise verschiedene Anstiege der Übertragungsfläche 21 relativ zur Übertragungsachse U eingestellt wird. Im Beispiel von Fig. 1a und Fig. 1b ist beispielsweise im unteren Abschnitt des Übertragungselements 2 eine erste Rundung vorgesehen, an welche sich ein geradliniger bzw. linearer oder konischer Abschnitt anschließt, wobei in dem Bereich, in welchem das Übertragungselement 2 im zweiten Zustand des Bremssystems mit dem Kolbenelement in Eingriff gelangt, ein zweiter gerundeter Abschnitt vorgesehen ist, wobei der Rundungsradius des zweiten gerundeten Abschnitts (in Fig. 1a und b jeweils oben an der Übertragungsfläche 21) einen größeren Rundungsradius aufweist als der im unteren Bereich angeordnete erste gerundete Abschnitt. Ebenso ist vorzugsweise am Kolbenelement 4 die Kolbenfläche 42 mit verschiedenen Rundungsradien ausgestattet, wobei vorzugsweise im ersten Zustand des Bremssystems ein Abschnitt der Kolbenfläche 42 mit dem Übertragungselement 2 in Eingriff gelangt, welcher einen kleineren Rundungsradius aufweist als der Abschnitt der Kolbenfläche 42, welcher im zweiten Zustand des Bremssystems mit dem Übertragungselement in Eingriff gelangt.

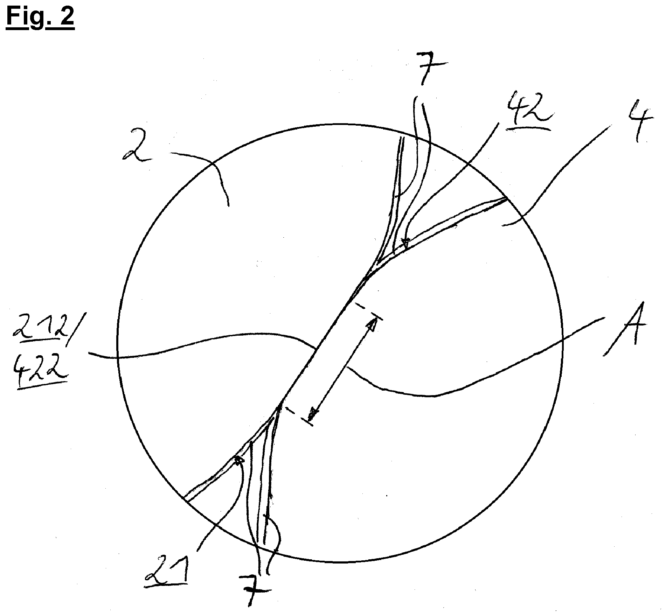

Fig. 2 zeigt die in Fig. 1b innerhalb des Kreises angeordnete Geometrie in vergrößerter Ansicht. Dabei ist besonders deutlich der Bereich zwischen dem zweiten Übertragungsabschnitt 212 und dem zweiten Kolbenabschnitt 422 dargestellt, wobei in diesem Bereich ein Gleitabschnitt A definiert ist, welcher eine bestimmte Querschnittsfläche aufweist, über welche die Kraft zwischen dem Übertragungselement 2 und dem Kolbenelement 4 übertragen wird. Weiterhin ist dargestellt, dass sowohl an der Übertragungsfläche 21 als auch an der Kolbenfläche 42 vorzugsweise ein Schmierfilm 7 haftet, welcher auch in den Gleitabschnitt A eindringt und durch die bevorzugte gerundete Ausgestaltung der Übertragungsfläche 21 und der Kolbenfläche 42 in diesen Gleitabschnitt A hineingezogen wird. Es ist auf diese Weise möglich, die Reibung und somit den Verschleiß und den Kraftaufwand an dem erfindungsgemäßen Bremssystem deutlich zu reduzieren, da eine permanente Schmierung der jeweiligen Gleitfläche eingerichtet ist.

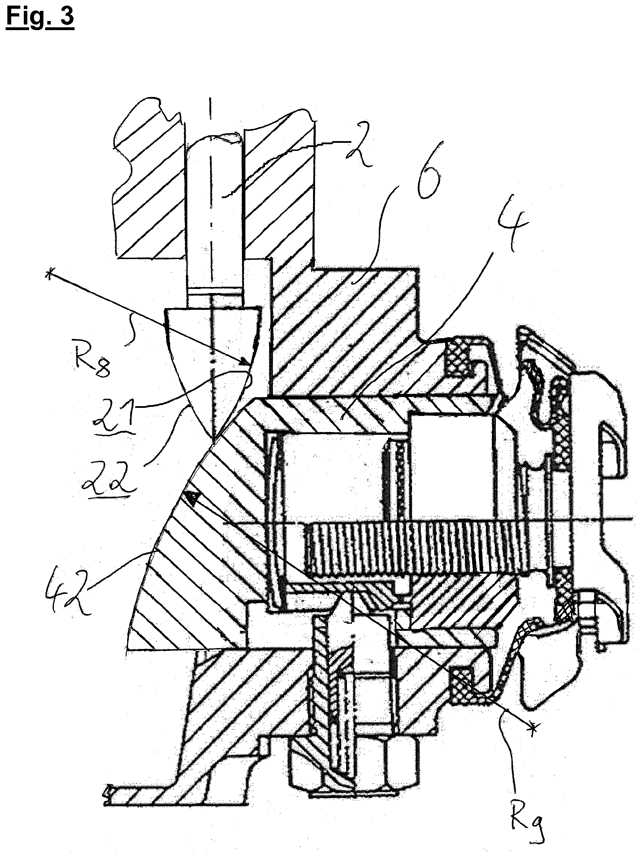

Fig. 3 zeigt eine bevorzugte Ausführungsform des erfindungsgemäßen Bremssystems, wobei das Gehäuse 6 gezeigt ist, in welchem das Kolbenelement 4 und das Übertragungselement 2 geführt ist. Das Größenverhältnis zwischen Kolbenelement 4 und Übertragungselement 2 ist größer als in der Realität dargestellt um insbesondere die Rundung der Kolbenfläche 42 hervorzuheben. Dabei ist insbesondere gezeigt, dass am Kolbenelement 4 bevorzugt eine Nachstellvorrichtung vorgesehen ist, um einen Verschleiß der Bremsbacken (nicht gezeigt), welche durch das Kolbenelement 4 verlagert werden, auszugleichen, wobei die Nachstelleinrichtung auch gleichzeitig vorgesehen sein kann, um einen Verschleiß der Übertragungsfläche 21 und der Kolbenfläche 42 auszugleichen. Bei dieser bevorzugten Ausführungsform weisen sowohl die Übertragungsfläche 21 als auch die Kolbenfläche 32 vorzugsweise eine gleichmäßige Rundung auf, wobei an der Übertragungsfläche 21 eine Rundung mit einem ersten mittleren Rundungsradius R₈ vorgesehen ist, und wobei an der Kolbenfläche 42 eine Rundung mit einem zweiten mittleren Rundungsradius R₉ vorgesehen ist. Dabei ist vorzugsweise der erste mittlere Rundungsradius kleiner als der zweite mittlere Rundungsradius. Durch die Auswahl dieses bevorzugten ersten mittleren Rundungsradius R₈ und des zweiten mittleren Rundungsradius R₉ lässt sich insbesondere eine günstige Geometrie der Eingriffsfläche zwischen der Übertragungsfläche 21 und der Kolbenfläche 42 erreichen.

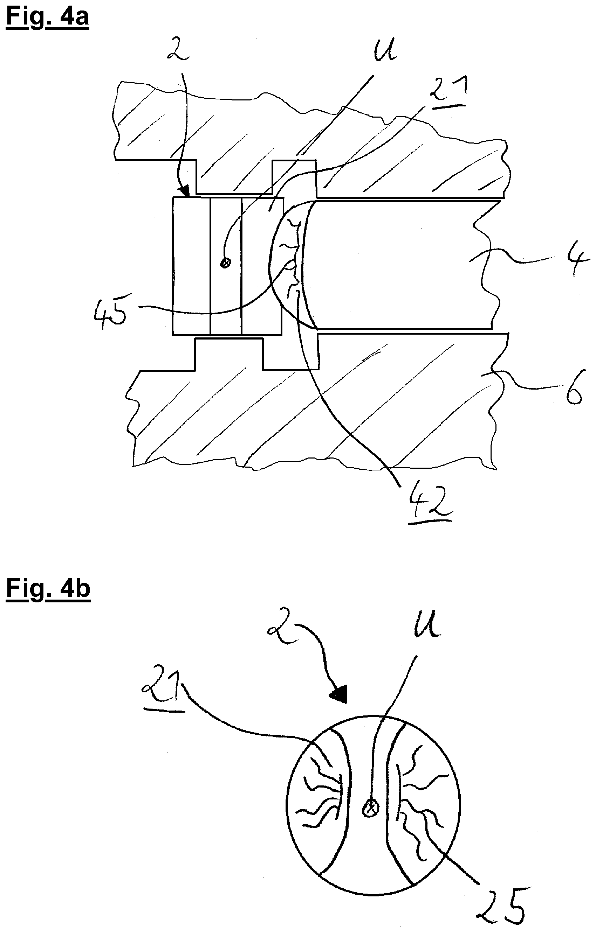

Fig. 4a und Fig. 4b zeigen zwei Ansichten bevorzugter Ausführungsformen des erfindungsgemäßen Bremssystems längs der Übertragungsachse U. Vorzugsweise zeigen Fig. 4a und Fig.4b Ausführungsformen des in Fig. 3 gezeigten Gegenstandes aus einer zweiten Perspektive. Deutlich erkennbar ist die verschiedene Ausgestaltung der Übertragungsfläche 21, welche in Fig. 4a aus dieser Perspektive betrachtet rechteckig ausgebildet ist und in Fig. 4b gerundet. Gleichzeitig ist die Kolbenfläche 42 in alle Richtungen quer zur Übertragungsachse U gerundet ausgebildet und somit vorzugsweise ballig. An der Übertragungsfläche 21 ist vorzugsweise ein übertragungsseitiger Aufnahmebereich 25 vorgesehen, welcher zur Speicherung und gleichmäßigen Verteilung von Schmiermittel dient. Vorzugsweise ist an der Kolbenfläche 42 ein kolbenseitiger Aufnahmebereich 45 vorgesehen, welcher der Speicherung und gleichmäßigen Verteilung von Schmiermittel dient.

### Bezugszeichenliste:

- 2: - Übertragungselement
- 4: - Kolbenelement
- 6: - Gehäuse
- 7: - Schmierfilm
- 21: - Übertragungsfläche (erste)
- 22: - zweite Übertragungsfläche
- 25: - übertragungsseitiger Aufnahmebereich
- 42: - Kolbenfläche
- 45: - kolbenseitiger Aufnahmebereich
- 211: - erster Übertragungsabschnitt
- 212: - zweiter Übertragungsabschnitt
- 421: - erster Kolbenabschnitt
- 422: - zweiter Kolbenabschnitt
- α₁: - erster Winkel
- α₂: - zweiter Winkel
- A: - Gleitabschnitt
- R₈: - erster mittlerer Rundungsradius
- R₉: - zweiter mittlerer Rundungsradius
- U: - Übertragungsachse

## Patentansprüche

1. Bremssystem, insbesondere Spreizkeiltrommelbremse für Nutzfahrzeuge, umfassend ein Übertragungselement (2) und ein Kolbenelement (4) wobei das Übertragungselement (2) längs einer Übertragungsachse (U) verlagerbar geführt ist,
wobei das Kolbenelement (4) quer zu der Übertragungsachse (U) verlagerbar geführt ist,
wobei das Übertragungselement (2) eine Übertragungsfläche (21) aufweist, die geneigt zur Übertragungsachse (U) ausgerichtet ist,
wobei sich das Kolbenelement (4) mit einer Kolbenfläche (42) im Wesentlichen unmittelbar an der Übertragungsfläche (21) abstützt,
wobei eine Verlagerung des Übertragungselements (2) längs der Übertragungsachse (U) eine Verlagerung des Kolbenelements (4) im Wesentlichen quer zur Übertragungsachse (U) bewirkt,
wobei die Übertragungsfläche (21) und/oder die Kolbenfläche (42) gerundet ausgebildet ist,
**dadurch gekennzeichnet dass** in einem ersten Zustand des Bremssystems die Übertragungsfläche (21) in einem ersten Übertragungsabschnitt (211) an einem ersten Kolbenabschnitt (421) der Kolbenfläche (42) anliegt,
wobei in einem zweiten Zustand des Bremssystems die Übertragungsfläche (21) in einem zweiten Übertragungsabschnitt (212) an einem zweiten Kolbenabschnitt (422) der Kolbenfläche (42) anliegt,
wobei sich der erste Übertragungsabschnitt (211) im Wesentlichen um einen ersten Winkel (α₁) zur Übertragungsachse (U) verschwenkt erstreckt,
wobei sich der zweite Übertragungsabschnitt (212) im Wesentlichen um einen zweiten Winkel (α₂) zur Übertragungsachse (U) verschwenkt erstreckt, und
wobei der zweite Winkel (α₂) vorzugsweise einen kleineren Betrag aufweist als der erste Winkel (α₁).

2. Bremssystem nach Anspruch 1,
wobei die Übertragungsfläche (21) oder die Kolbenfläche (42) eine konkave Rundung aufweist, und
wobei die jeweils andere Fläche (21, 42) eine konvexe Rundung aufweist,
wobei der Rundungsradius der konvexen Rundung bevorzugt kleiner ist als der Rundungsradius der konkaven Rundung.

3. Bremssystem nach Anspruch 2,
wobei die Übertragungsfläche (21) oder die Kolbenfläche (42) eine erste Rundung mit einem ersten mittleren Rundungsradius (R₈) aufweist und wobei die jeweils andere Fläche (21, 42) eine zweite Rundung mit einem zweiten mittleren Rundungsradius (R₉) aufweist,
wobei der erste mittlere Rundungsradius (R₈) zum zweiten mittleren Rundungsradius (R₉) in einem Verhältnis von 0,4 bis 1, bevorzugt 0,5 bis 0,95 und besonders bevorzugt von ca. 0,7 bis 0,85 steht.

4. Bremssystem nach einem der vorhergehenden Ansprüche,
wobei der Verlauf der Rundung der Übertragungsfläche (21) und/oder der Kolbenfläche (42) nicht linear ist.

5. Bremssystem nach einem der vorhergehenden Ansprüche,
wobei der Rundungsradius ausgewählter Abschnitte der Übertragungsfläche (21) und/oder der Kolbenfläche (42) verschiedene Werte aufweist und/oder ein nicht gerundeter Abschnitt vorgesehen ist.

6. Bremssystem nach einem der vorhergehenden Ansprüche,
wobei bei einer Betätigung des Bremssystems die Übertragungsfläche (21) und die Kolbenfläche (42) in einem Gleitabschnitt (A) aufeinander liegen,
wobei der Gleitabschnitt ein 0,05- bis 0,3-faches, vorzugsweise ein 0,05- bis 0,2-faches und insbesondere bevorzugt ein ca. 0,08- bis 0,12-faches der Übertragungsfläche (21) und/oder der Kolbenfläche (42) einnimmt.

7. Bremssystem nach Anspruch 6,
wobei die Geometrie der Übertragungsfläche (21) und/oder der Kolbenfläche (42) derart gestaltet ist, dass der Gleitabschnitt (A) im ersten Zustand des Bremssystems kleiner ist als im zweiten Zustand des Bremssystems.

8. Bremssystem nach einem der vorhergehenden Ansprüche,
wobei die Übertragungsfläche (21) und/oder die Kolbenfläche (42) ein gehärtetes Material umfasst.

9. Bremssystem nach einem der vorhergehenden Ansprüche,
wobei die Übertragungsfläche (21) einen übertragungsseitigen Aufnahmebereich (25) und/oder die Kolbenfläche (42) einen kolbenseitigen Aufnahmebereich (45) umfasst, welcher zur Bereitstellung und Verteilung eines Schmiermittels zwischen der Übertragungsfläche (21) und der Kolbenfläche (42) ausgelegt ist.

10. Bremssystem nach einem der vorhergehenden Ansprüche,
wobei zwischen der Übertragungsfläche (21) und der Kolbenfläche (42) ein Schmierfilm (7) vorgesehen ist.

11. Bremssystem nach einem der vorhergehenden Ansprüche,
wobei das Übertragungselement (2) eine zweite Übertragungsfläche (22) aufweist, die vorzugsweise ebenensymmetrisch zur ersten Übertragungsfläche (21) bezogen auf eine durch die Übertragungsachse (U) verlaufende Ebene ausgebildet ist.

12. Bremssystem nach einem der vorhergehenden Ansprüche,
wobei das Übertragungselement (2) zur Einleitung eines Bremsvorganges von einem Bremszylinder mit einer Betätigungskraft beaufschlagt wird, um periodisch in Eingriff mit dem Kolbenelement (4) zu gelangen.

13. Bremssystem nach einem der vorhergehenden Ansprüche, aufweisend ein Gehäuse (6),
wobei das Übertragungselement (2) in dem Gehäuse (6) angeordnet und längs der Übertragungsachse (U) im Gehäuse geführt ist,
wobei das Kolbenelement (4) in dem Gehäuse (6) angeordnet und quer zu der Übertragungsachse (U) verlagerbar in dem Gehäuse (6) geführt ist, wobei das Gehäuse (6) vorzugsweise einstückig ausgebildet ist.

## Claims

1. A brake system, in particular wedge drum brake for utility vehicles, comprising a transmission element (2) and a piston element (4),
wherein the transmission element (2) is guided displaceably along a transmission axis (U),
wherein the piston element (4) is guided displaceably transversely with respect to the transmission axis (U),
wherein the transmission element (2) has a transmission surface (21) which is oriented in an inclined manner with respect to the transmission axis (U), wherein the piston element (4) is supported with a piston surface (42) substantially directly on the transmission surface (21),
wherein a displacement of the transmission element (2) along the transmission axis (U) causes a displacement of the piston element (4) substantially transversely with respect to the transmission axis (U),
wherein the transmission surface (21) and/or the piston surface (42) are/is of curved design,
**characterized in that**
in a first state of the brake system, the transmission surface (21) in a first transmission portion (211) lies against a first piston portion (421) of the piston surface (42),
wherein, in a second state of the brake system, the transmission surface (21) in a second transmission portion (212) lies against a second piston portion (422) of the piston surface (42),
wherein the first transmission portion (211) extends substantially pivoted about a first angle (α₁) with respect to the transmission axis (U),
wherein the second transmission portion (212) extends substantially pivoted about a second angle (α₂) with respect to the transmission axis (U), and
wherein the second angle (α₂) is preferably of a smaller value than the first angle (α₁).

2. The brake system as claimed in claim 1,
wherein the transmission surface (21) or the piston surface (42) has a concave curvature, and
wherein the other surface (21, 42) in each case has a convex curvature, wherein the radius of curvature of the convex curvature is preferably smaller than the radius of curvature of the concave curvature.

3. The brake system as claimed in claim 2,
wherein the transmission surface (21) or the piston surface (42) has a first curvature with a first central radius of curvature (R₈), and wherein the other surface (21, 42) in each case has a second curvature with a second central radius of curvature (R₉),
wherein the first central radius of curvature (R₈) is at a ratio of 0.4 to 1, preferably 0.5 to 0.95 and particularly preferably of approx. 0.7 to 0.85 to the second central radius of curvature (R₉).

4. The brake system as claimed in one of the preceding claims,
wherein the profile of the curvature of the transmission surface (21) and/or of the piston surface (42) is not linear.

5. The brake system as claimed in one of the preceding claims,
wherein the radius of curvature of selected portions of the transmission surface (21) and/or of the piston surface (42) has different values and/or a portion which is not curved is provided.

6. The brake system as claimed in one of the preceding claims,
wherein, when the brake system is actuated, the transmission surface (21) and the piston surface (42) lie on one another in a sliding portion (A), wherein the sliding portion takes up 0.05 to 0.3 times, preferably 0.05 to 0.2 times and in particular preferably approx. 0.08 to 0.12 times the transmission surface (21) and/or the piston surface (42).

7. The brake system as claimed in claim 6,
wherein the geometry of the transmission surface (21) and/or of the piston surface (42) is configured in such a manner that the sliding portion (A) is smaller in the first state of the brake system than in the second state of the brake system.

8. The brake system as claimed in one of the preceding claims,
wherein the transmission surface (21) and/or the piston surface (42) comprises a hardened material.

9. The brake system as claimed in one of the preceding claims,
wherein the transmission surface (21) comprises a transmission-side receiving region (25) and/or the piston surface (42) comprises a piston-side receiving region (45) which is designed for providing and distributing a lubricant between the transmission surface (21) and the piston surface (42).

10. The brake system as claimed in one of the preceding claims,
wherein a lubricating film (7) is provided between the transmission surface (21) and the piston surface (42).

11. The brake system as claimed in one of the preceding claims,
wherein the transmission element (2) has a second transmission surface (22) which is preferably designed in a plane-symmetrical manner with respect to the first transmission surface (21) based on a plane running through the transmission axis (U).

12. The brake system as claimed in one of the preceding claims,
wherein, in order to initiate a braking operation, the transmission element (2) is acted upon with an actuating force by a brake cylinder in order periodically to enter into engagement with the piston element (4).

13. The brake system as claimed in one of the preceding claims,
having a housing (6),
wherein the transmission element (2) is arranged in the housing (6) and is guided along the transmission axis (U) in the housing,
wherein the piston element (4) is arranged in the housing (6) and is guided displaceably in the housing (6) transversely with respect to the transmission axis (U),
wherein the housing (6) is preferably of integral design.

## Revendications

1. Système de frein, en particulier frein à tambour à cale d'écartement pour véhicules utilitaires, comportant un élément de transmission (2) et un élément formant piston (4),
dans lequel
l'élément de transmission (2) est guidé de façon mobile le long d'un axe de transmission (U),
l'élément formant piston (4) est guidé de façon mobile transversalement à l'axe de transmission (U),
l'élément de transmission (2) comprend une surface de transmission (21) qui est orientée en oblique par rapport à l'axe de transmission (U),
l'élément formant piston (4) s'appuie par une surface de piston (42) sensiblement directement contre la surface de transmission (21),
un déplacement de l'élément de transmission (2) le long de l'axe de transmission (U) provoque un déplacement de l'élément formant piston (4) sensiblement transversalement à l'axe de transmission (U),
la surface de transmission (21) et/ou la surface de piston (42) est réalisée arrondie,
**caractérisé en ce que**
dans un premier état du système de frein, la surface de transmission (21) prend appui, dans une première portion de transmission (211), contre une première portion de piston (421) de la surface de piston (42),
dans un second état du système de frein, la surface de transmission (21) prend appui, dans une seconde portion de transmission (212), contre une seconde portion de piston (422) de la surface de piston (42),
la première portion de transmission (211) s'étend sensiblement en étant basculée d'un premier angle (α₁) par rapport à l'axe de transmission (U),
la seconde portion de transmission (212) s'étend sensiblement en étant basculée d'un second angle (α₂) par rapport à l'axe de transmission (U), et
le second angle (α₂) présente de préférence une valeur inférieure à celle du premier angle (α₁).

2. Système de frein selon la revendication 1,
dans lequel
la surface de transmission (21) ou la surface de piston (42) présente un arrondi concave, et
l'autre surface respective (21, 42) présente un arrondi convexe,
le rayon de l'arrondi convexe est de préférence inférieur au rayon de l'arrondi concave.

3. Système de frein selon la revendication 2,
dans lequel
la surface de transmission (21) ou la surface de piston (42) présente un premier arrondi ayant un premier rayon moyen (R₈), et
l'autre surface respective (21, 42) présente un second arrondi ayant un second rayon moyen (R₉),
le premier rayon moyen (R₈) est dans un ratio de 0,4 à 1, de préférence de 0,5 à 0,95 et de manière particulièrement préférée d'environ 0,7 à 0,85 par rapport au second rayon moyen (R₉).

4. Système de frein selon l'une des revendications précédentes,
dans lequel
l'allure de l'arrondi de la surface de transmission (21) et/ou de la surface de piston (42) n'est pas linéaire.

5. Système de frein selon l'une des revendications précédentes,
dans lequel
le rayon de l'arrondi de portions choisies de la surface de transmission (21) et/ou de la surface de piston (42) présente différentes valeurs et/ou il est prévu une portion non arrondie.

6. Système de frein selon l'une des revendications précédentes,
dans lequel
lors d'un actionnement du système de frein, la surface de transmission (21) et la surface de piston (42) sont superposées dans une portion de glissement (A),
la portion de glissement occupe une surface de 0,05 à 0,3 fois, de préférence de 0,05 à 0,2 fois et de manière particulièrement préférée d'environ 0,08 à 0,12 fois la surface de transmission (21) et/ou la surface de piston (42).

7. Système de frein selon la revendication 6,
dans lequel
la géométrie de la surface de transmission (21) et/ou de la surface de piston (42) est conçue de telle sorte que dans le premier état du système de frein, la portion de glissement (A) est plus petite que dans le second état du système de frein.

8. Système de frein selon l'une des revendications précédentes,
dans lequel
la surface de transmission (21) et/ou la surface de piston (42) comprend un matériau durci.

9. Système de frein selon l'une des revendications précédentes,
dans lequel
la surface de transmission (21) comprend une zone de réception (25) côté transmission et/ou la surface de piston (42) comprend une zone de réception (45) côté piston, qui est conçue pour fournir et répartir un lubrifiant entre la surface de transmission (21) et la surface de piston (42).

10. Système de frein selon l'une des revendications précédentes,
dans lequel
un film lubrifiant (7) est prévu entre la surface de transmission (21) et la surface de piston (42).

11. Système de frein selon l'une des revendications précédentes,
dans lequel
l'élément de transmission (2) comprend une seconde surface de transmission (22) dont le plan est de préférence à symétrie de la première surface de transmission (21) par rapport à un plan passant par l'axe de transmission (U).

12. Système de frein selon l'une des revendications précédentes,
dans lequel
pour initier une opération de freinage, l'élément de transmission (2) est sollicité d'une force d'actionnement par un cylindre de frein, afin de venir périodiquement en engagement avec l'élément formant piston (4).

13. Système de frein selon l'une des revendications précédentes, comportant un boîtier (6)
dans lequel
l'élément de transmission (22) est agencé dans le boîtier (6) et guidé dans le boîtier le long de l'axe de transmission (U),
l'élément formant piston (4) est agencé dans le boîtier (6) et guidé dans le boîtier en étant mobile transversalement à l'axe de transmission (U),
le boîtier (6) est réalisé de préférence d'un seul tenant.
